# EUROPEAN PATENT SPECIFICATION

(11) **EP 0 695 787 B1**
(45) Date of publication and mention of the grant of the patent: **09.08.2000**
(21) Application number: 95305314.7
(22) Date of filing: 31.07.1995
(51) Int. Cl.: C08L 83/04

(54) **Curable alkenyl-terminal polydiorganosiloxane compositions**
Härtbare alkenyl-abgeschlossene Polydiorganosiloxan-Zusammensetzungen
Compositions réticulables de polydiorganosiloxane à terminaisons alkényls

(30) Priority: 04.08.1994 US 286071
(43) Date of publication of application: 07.02.1996
(73) Proprietor: DOW CORNING CORPORATION, Midland, Michigan 48686-0995 (US)
(72) Inventor: Kadlec, Donald Anthony, Midland, Michigan 48642 (US); Schulz, William James, Jr., Midland, Michigan (US)
(74) Representative: Spott, Gottfried, Dr.

(56) References cited:
- EP-A- 0 247 492
- EP-A- 0 440 138
- US-A- 3 671 480
- US-A- 3 884 866

## Description

The present invention is a curable composition comprising a mixture of a first and second alkenyldiorganosiloxy-terminated polydiorganosiloxane characterized by having different viscosities and essentially containing no ethylenically unsaturated hydrocarbon radicals bonded to non-terminal silicon atoms. Silicone elastomers formed from our compositions by platinum group catalysts have physical properties at least comparable to those made from compositions of the prior art. These latter compositions have a second alkenyldiorganosiloxy-terminated polydiorganosiloxane which has a higher viscosity and also has ethylenically unsaturated hydrocarbon radicals bonded to non-terminal silicon atoms.

It is known that platinum-group catalyst, curable compositions comprising a high-viscosity alkenyldiorganosiloxy-terminated polydiorganosiloxane and a low-viscosity alkenyl-containing organosiloxane have improved physical properties when compared to compositions comprising only a high-viscosity alkenyldiorganosiloxy-terminated polydiorganosiloxane. However, it is generally thought in the art that to achieve these improved physical properties, the lower molecular weight alkenyl-containing organosiloxane must have a viscosity of 50 mPa·s or more, and preferably also contain alkenyl substitution on non-terminal silicon atoms.

We have found that when a low-molecular weight vinyldiorganosiloxy-terminated polydiorganosiloxane has a viscosity within a range of 1.0 to less than 50 mPa·s, silicone elastomers formed therefrom have physical properties at least comparable to those compositions of the prior art.

Typically, our compositions require less of the low molecular weight component and reduced alkenyl substitution in the composition to provide silicone elastomers with comparable physical properties of the art. This results in considerable cost savings due to a reduced requirement for alkenyl substitution and lessor amounts of the low-viscosity component.

The prior art is generally represented by the following: U.S. Patents 3,671,480; 3,884,866; 4,162,243; 4,753,978 and 5,110,845.

The present invention is a platinum-group catalyst, curable composition comprising a mixture of an alkenyldiorganosiloxy-terminated polydiorganosiloxane having a viscosity within a range of about 20,000 mPa·s to 100,000 mPa·s at 25°C. and an alkenyldiorganosiloxy terminated polydiorganosiloxane having a viscosity within a range of about 1.0 mPa·s to less than 50 mPa·s at 25°C. This composition can provide silicone elastomers having physical properties, such as tear, which were previously thought only possible to obtain using mixtures of a high-viscosity alkenyldiorganosiloxy-terminated polydiorganosiloxane and a low molecular weight alkenyldiorganosiloxy-terminated polydiorganosiloxane having a viscosity of 50 mPa·s (25°C.) or greater.

Although U.S. Patent 3,884,866 suggests that the low-viscosity alkenyldiorganosiloxy-terminated polydiorganosiloxane can have a viscosity as low as 50 mPa·s (25°C.), this is not supported by the accompanying examples. Subsequent patents demonstrate that those of ordinary skill in the art believed that lower-viscosity components required the presence of alkenyl groups on non-terminal silicon atoms for the cured silicon elastomer to achieve good physical properties.

Therefore, we have unexpectedly found that the low-viscosity component can be an alkenyldiorganosiloxy terminated polydiorganosiloxane having a viscosity within a range of 1 mPa·s to less than 50 mPa·s at 25°C. and that the compositions containing this low-viscosity component can provide silicone elastomers with higher physical properties such as tear strength. Furthermore, these physical properties are obtained by using low concentrations of the low-viscosity component and a reduced amount of alkenyl substituents to achieve a desired level of physical properties of a silicon elastomer.

The present invention provides a curable organosiloxane composition. This curable organosiloxane composition comprises:
(A) from 75 to 99.9 weight percent, based on the total weight of (A) and (B) of a first alkenyldiorganosiloxy-terminated polydiorganosiloxane having a viscosity within a range of 20,000 to 100,000 mPa·s at 25°C. and containing no ethylenically unsaturated hydrocarbon radicals bonded to non-terminal silicon atoms;
(B) from 0.1 to 25 weight percent, based on the total weight of (A) and (B), of a second alkenyldiorganosiloxy-terminated polydiorganosiloxane having a viscosity within a range of 1.0 mPa·s to less than 50 mPa·s at 25°C. and containing no ethylenically unsaturated hydrocarbon radicals bonded to non-terminal silicon atoms;
(C) from 10 to 60 weight percent, based on the weight of the composition, of a treated silica reinforcing filler;
(D) an amount sufficient to cure the composition of an organohydrogensiloxane containing an average of two or more silicon-bonded hydrogen atoms per molecule; and
(E) a platinum group metal-containing catalyst in an amount sufficient to promote curing of the composition.

The first alkenyldiorganosiloxy-terminated polydiorganosiloxane of the present composition (component (A)) is described by the following formula R¹R₂SiO(R₂SiO)ₓSiR₂R¹ (1). Each R is independently selected from non-ethylenically unsaturated monovalent hydrocarbon radicals comprising one to 20 carbon atoms. R¹ is independently selected from alkenyl radicals comprising two to ten carbon atoms and x represents a degree of polymerization (DP) such that the viscosity of component (A) is within a range of 20,000 to 100,000 mPa·s at 25°C.

The substituent R is alkyl such as methyl, ethyl, propyl, tertiary butyl and hexyl; cycloalkyl such as cyclohexyl; aryl such as phenyl or tolyl; and halogen substituted alkyl such as 3,3,3-trifluoropropyl or perfluoropropyl. Preferred is when at least 50 percent of the R substituents are lower alkyls comprising one to six carbon atoms. Most preferred is when essentially all of the R substituents are methyl.

The substituent R¹ is an alkenyl radical comprising from two to ten carbon atoms. Preferred is when R¹ is a terminally unsaturated radical, for example, vinyl, allyl or 5-hexenyl. Most preferred is when R¹ is vinyl.

Component A contains essentially no ethylenically unsaturated hydrocarbon radicals bonded to non-terminal silicon atoms. The term "no ethylenically unsaturated hydrocarbon radicals bonded to non-terminal silicon atoms" means that the only ethylenically unsaturated hydrocarbon radicals present on non-terminal silicon atoms of component (A) result from impurities present in the reactants used to prepare component (A) or from undesired rearrangements occurring during preparation of component (A).

In formula (1), x is a value for a DP such that the viscosity of component (A) is within a range of 20,000 to 100,000 mPa·s at 25°C. Preferred is when x is a value such that the viscosity is within a range of 40,000 to 60,000 mPa·s at 25°C.

The second alkenyldiorganosiloxy-terminal polydiorganosiloxane of our composition (component (B)) is described by the following formula R¹R₂SiO(R₂SiO)_{y}SiR₂R¹ (2), where R and R¹ are as described above for formula (1). In formula (2), y is a value for a DP such that the viscosity of component (B) is within a range of 1.0 mPa·s to less than 50 mPa·s at 25°C. Preferred is when y is a value such that the viscosity is within a range of 10 to 40 mPa·s at 25°C.

Component (B) contains "essentially no ethylenically unsaturated hydrocarbon radicals bonded to non-terminal silicon atoms," where this term means the same as described for component (A).

In the claimed composition, component (A) and component (B) are combined such that component (A) is 75 to 99.9 weight percent of the combined weight of the two. Conversely, component (B) comprises 0.1 to 25 weight percent of the combined weight of the two. Preferred is when component (B) comprises 0.5 to 10 weight percent of the combined weight of components (A) and (B).

Our organosiloxane composition also comprises from 10 to 60 weight percent, based on the weight of the composition, of a treated silica reinforcing filler (component (C)). Preferred is when the composition comprises 25 to 45 weight percent of the silica filler, on the same basis.

Both precipitated and fumed silica can be used, however fumed silica is preferred. It is also preferred that the treated silica filler have a surface area greater than 50 m²/g, with a preferred surface area within a range of 300 m²/g to 500 m²/g.

The reinforcing silica filler is treated with one or more of the silica treating agents known to prevent a phenomenon typically referred to as "creping" or "crepe hardening" which occurs during processing of organosiloxane compositions. A preferred treating agent is a disilazane or a mixture of disilazanes described by formula (R²₃Si)₂NH, where each R² is independently selected from monovalent hydrocarbon radicals comprising one to seven carbon atoms. Most preferred is when each R² is independently selected from methyl or vinyl.

The reinforcing silica filler can also be treated with the treating agent by standard methods known in the art. Thus, the filler can first be treated with the treating agent and then added to the present organosiloxane composition or the reinforcing silica filler and treating agent can be added separately to our organosiloxane composition and the treatment of the filler then effected in situ. Preferred is when the reinforcing silica filler and a disilazane, or mixture of disilazanes as described above, are added to a mixture of components (A) and (B) along with sufficient water to effect reaction of the disilazane with the silica filler. An example of such a treatment procedure is given in the following examples.

Typically, the treating agent comprises 10 to 50 weight percent of the combined weight of the reinforcing silica filler and the treating agent. Preferred is when the treating agent is a disilazane comprising 15 to 30 weight percent on the same basis. Sufficient water must be present during treatment of the silica reinforcing agent with the disilazane to effect reaction of the disilazane with the silica. Generally, 5 to 70 weight percent of water, based on the combined weight of the disilazane treating agent and the water, is useful to effect this reaction. Preferred is 12 to 50 weight percent water on the same basis. Those skilled in the art will recognize that the water associated with the reinforcing silica filler can provide at least a portion of the water required to effect the treatment of the silica with the disilazane.

The present composition requires the presence of an amount sufficient to cure the composition of an organohydrogensiloxane (component (D)) containing an average of two or more silicon-bonded hydrogen atoms per molecule. Component (D) must contain an average of at least two silicon-bonded hydrogen atoms per molecule and no more than one silicon-bonded hydrogen atom per silicon atom. The remaining valences of the silicon atoms are satisfied by divalent oxygen atoms or by monovalent hydrocarbon radicals comprising one to seven carbon atoms. The monovalent hydrocarbons radicals are alkyls such as methyl, ethyl, propyl, tertiary butyl and hexyl; cycloalkyls such as cyclohexyl; aryls such as phenyl or tolyl; and halogen substituted alkyls such as 3,3,3-trifluoropropyl or perfluoropropyl. Preferred is when all of the monovalent hydrocarbon radicals are methyl. Examples of organohydrogensiloxane crosslinkers for the present composition are described, for example, in U.S. Patents 3,989,668 and 4,753,978. The organohydrogensiloxane crosslinker can be linear, cyclic or branched siloxane polymers and also mixtures thereof.

The amount of component (D) useful in our composition is that sufficient to cure the composition. Generally, a useful amount of component (D) provides a ratio of silicon-bonded hydrogen atoms to alkenyl substituents provided by components (A) and (B) within a range of 1:10 to 10:1. Preferred is when the ratio is within a range of 1:1 to 5:1. More preferred is a ratio of silicon-bonded hydrogen atoms of component (D), to alkenyl substituents of components (A) and (B), of 1:1 to 2:1.

The present composition also comprises a platinum group metal-containing catalyst in an amount sufficient to promote curing of the composition. This catalyst can be any such catalyst which is known to catalyze the reaction of silicon-bonded hydrogen atoms with silicon-bonded alkenyl groups. By "platinum group metal", it is meant metals of ruthenium, rhodium, palladium, osmium, iridium and platinum. A particularly useful catalyst in our compositions are the complexes prepared from chloroplatinic acid as described by U.S. Patent 3,419,593, which teaches such complexes and their preparation. A preferred catalyst is a platinum-containing complex which is the reaction product of chloroplatinic acid and sym-divinyltetramethyldisiloxane. Other examples of useful platinum group metal-containing catalysts are found in U.S. Patents 3,989,668; 5,036,117; 3,159,601; 3,220,972; 3,296,291; 3,516,946; 3,814,730 and 3,928,629 which show useful platinum group metal-containing catalysts and methods for their preparation.

The amount of platinum group-metal containing catalyst useful in effecting curing of the present composition is not narrowly limited as long as there is a sufficient amount present to accelerate a reaction between the silicon-bonded hydrogen atoms of component (D) and the alkenyl substituents of components (A) and (B). The appropriate amount of the platinum group metal-containing catalyst will also depend upon the particular catalyst used. In general, as low as 0.001 part by weight of platinum group metal for every million parts (ppm) by weight of the organosiloxane composition (i.e., components (A) through (E)) is useful. Preferably, the amount of platinum group metal is at least 1.0 ppm, on the same basis. More preferred is at least 1.0 to 10,000 ppm of platinum group metal, on the same basis.

The claimed composition may cure rapidly at room temperature. To hinder curing, an inhibitor may be added to our composition. The inhibitor can be any of those materials known to inhibit the catalytic activity of platinum group metal-containing catalysts. By "inhibitor", it is meant a material that retards the room temperature curing of a composition when incorporated in the composition at less than 10 weight percent of the composition, without preventing curing of the composition at elevated temperatures.

Inhibitors for platinum group metal-containing catalyst are well known in the organosilicon art. A preferred class of useful inhibitors in our composition are acetylenic alcohols as described in U.S. Patent 3,445,420. Such acetylenic alcohols are exemplified by ethynylcyclohexanol and methylbutynol. Other examples of useful inhibitors are described in U.S. Patent 5,036,117.

The amount of inhibitor useful in the present composition is not known to be critical and can be any amount that will retard the platinum group metal-containing catalyst catalyzed reaction of the silicon-bonded hydrogen atoms of component (D) with the alkenyl substituents of components (A) and (B), while not preventing said reaction at elevated temperatures. The specific amount of inhibitor to be used will depend upon the particular inhibitor used, the concentration and type of catalyst and the nature and amounts of components (A), (B) and (D). Generally, when an inhibitor is used, it is preferred that at least one mole of inhibitor be present for each mole of platinum group metal in the composition and that the inhibitor not exceed one weight percent of the composition.

The present organosiloxane composition may also contain other components such as mold release agents, pigments, ground quartz and thermal stabilizing additives.

Our curable organosiloxane composition can be formed from a two-part system which cures upon mixing and exposing to an appropriate temperature. For example, two equal portions comprising components (A), (B), (C) can be formed and component (E) (platinum group metal-containing catalyst) added to one portion to form a part (A) and component (D) (organohydrogensiloxane) added to a second portion to form a part B. The present composition can then be formed by combining parts A and B. In addition, an inhibitor may be added to part B.

### Example 1

Cured silicone elastomers were prepared from a composition comprising a 55,000 mPa·s (25°C.) vinyldimethylsiloxy-terminated polydimethylsiloxane polymer with and without the presence of a vinyldimethylsiloxy-terminated polydimethylsiloxane having a viscosity of 25 mPa·s at 25°C.

The compositions are further described in Table 1. The comparison composition comprised 100 parts of a vinyldimethylsiloxy-terminated polydimethylsiloxane having a viscosity of 55,000 mPa·s at 25°C. The test composition comprised 88 parts of a vinyldimethylsiloxy-terminated polydimethylsiloxane having a viscosity of 55,000 mPa·s at 25°C. and 12 parts of a vinyldimethylsiloxy-terminated polydimethylsiloxane having a viscosity of 25 mPa·s at 25°C.

The compositions, as described in Table 1, were prepared by the procedure that follows. About two-thirds of component (i) was placed into a mixer along with components (iii) and (vi). These components were then mixed together for ten minutes. Then one-half of component (iv) was added to the mixer. The mixer was purged with nitrogen and mixing continued for five minutes. Next one-half of the silica, component (v), was added to the mixer and mixing continued for 15 minutes. One-third of component (iv) was added to the mixer, the mixer purged with nitrogen and stirring continued for five minutes. One-third of component (v) was added to the mixer, the mixer purged with nitrogen and stirring continued for 15 minutes. The remainder of component (v) was added to the mixer, the mixer purged with nitrogen and stirring continued for 15 minutes. The remainder of component (iv) was added to the mixer, the mixer purged with nitrogen and mixing continued for 30 minutes.

The mixture was then heated under vacuum at a temperature of 150°C. for 2.5 hours to remove volatiles. After the mixture cooled to room temperature, the remainder of component (i) was blended into the mixture. For the test composition, component (ii) was also blended into the mixture.

The resulting compositions were each divided into two equal parts designated as Part A and Part B. Into each part A was mixed 0.43 weight percent of a platinum-containing complex (27 ppm platinum) which was the reaction product of chloroplatinic acid and sym-divinyltetramethyldisiloxane. Into each part B was mixed 0.07 weight percent of 1-ethynylcyclohexan-1-ol and 1.4 weight percent of a methylhydrogensiloxane crosslinker having a viscosity of 5 mPa·s at 25°C. and 1.05 weight percent silicon-bonded hydrogen.

For each composition, equal amounts of Part A and Part B were blended on a water-cooled three-roll mill. The blended compositions were transferred to standard chases for preparing samples suitable for determinations of physical properties and then cured at 150°C. for five minutes. Next, the cured elastomers were tested by standard test methods as referenced in Table 2. Samples of the cured elastomers were also post cured at 200°C. for four hours and the physical properties tested. The physical properties for post-cured materials are reported in parenthesis in Table 2.

**Table 1**

| Organosiloxane Compositions | | | |
|---|---|---|---|
| Component | Comparison Composition (Parts) | Test Composition (Parts) | Component Description |
| (i) | 100 | 88 | vinyldimethylsiloxy-terminated polydimethylsiloxane (viscosity of 55,000 mPa·s at 25°C). |
| (ii) | 0 | 12 | vinyldimethylsiloxy-terminated polydimethylsiloxane (viscosity of 25 mPa·s at 25°C.) |
| (iii) | 1.0 | 1.0 | hydroxydimethylsiloxy-terminated vinylmethylsiloxane described by formula HO{(SiMe₂O)ₐ(SiMeViO)_{b}}H, having a viscosity of 40 mPa·s at 25°C. and 10.5 weight percent vinyl |
| (iv) | 15.3 | 15.3 | hexamethyldisilazane |
| (v) | 43 | 43 | silica (surface area 400 m²/g by BET) |
| (vii) | 2.0 | 2.0 | water |

**Table 2**

| Effects of Low-Viscosity Vinyldimethylsiloxy-Terminated Polydiorganosiloxane on Physical Properties of Elastomers | | | |
|---|---|---|---|
| ASTM Test Method | Test | Comparison Elastomer | Test Elastomer |
| D2240 | Durometer | 47 (50) | 48 (60) |
| D412 | Tensile (MPa) | 10.8 (9.5) | 7.7 (8.9) |
| D412 | % Elongation | 637 (542) | 685 (518) |
| D412 | 100% Modulus | 163 (193) | 208 (257) |
| D412 | 300% Modulus | 473 (564) | 507 (737) |
| D624 | Tear B (N·m) | 20.5 (19.7) | 31.8 (30.4) |
| D395 | % Compression set | 41 (24) | 70 (32) |

The data provided in Table 2 demonstrate the improved physical properties that are achieved by substituting a portion of the 55,000 mPa·s vinyldimethylsiloxy-terminated siloxane with a 25 mPa·s vinyldimethylsiloxy-terminated siloxane.

### Example 2

Cured silicone elastomers were prepared from a composition comprising a 55,000 mPa·s (25°C.) vinyldimethylsiloxy-terminated polydimethylsiloxane polymer and either a 450 mPa·s (25°C.) or a 25 mPa·s (25°C.) vinyldimethylsiloxy-terminated polydimethylsiloxane polymer. The compositions were prepared by the process described in Example 1. The base compositions were the same as described in Table 1, Example 1, with the following exceptions. The comparison composition comprised 70 weight percent of a vinyldimethylsiloxy-terminated polydimethylsiloxane having a viscosity of 55,000 mPa·s (25°C.) and 30 weight percent of a vinyldimethylsiloxy-terminated polydimethylsiloxane having a viscosity of 450 mPa·s (25°C.). The vinyl substituent represented 0.200 weight percent of the total weight of components (i) and (ii) in the comparison composition.

The test composition comprised 99 weight percent of a vinyldimethylsiloxy-terminated polydimethylsiloxane having a viscosity of 55,000 mPa·s (25°C.) and one weight percent of a vinyldimethylsiloxy-terminated polydimethylsiloxane having a viscosity of 25 mPa·s (25°C). The vinyl substituent represented 0.113 weight percent of the total weight of components (i) and (ii) in the test composition.

Cured silicone elastomers were prepared from the compositions by methods described in Example 1 and the physical properties were tested by standard methods as referenced in Table 3. Samples of the cured elastomers were post-cured at 200°C. for four hours and the physical properties similarly tested. The results of this testing of the elastomers are presented in Table 3. The results for post-cured materials are reported in parenthesis.

**Table 3**

| Effect of Molecular Weight of Vinyldimethylsiloxy-Terminated Polydiorganosiloxane on Physical Properties of Elastomers | | | |
|---|---|---|---|
| ASTM Test Method | Test | Comparison Elastomer | Test Elastomer |
| D2240 | Durometer | 47 (46) | 47 (53) |
| D412 | Tensile (MPa) | 10.6 (10.2) | 8.9 (8.7) |
| D412 | % Elongation | 616 (544) | 531 (420) |
| D412 | 100% Modulus | 154 (181) | 190 (257) |
| D412 | 300% Modulus | 467 (580) | 620 (852) |
| D624 | Tear B (N·m) | 20.8 (17.0) | 20.7 (21.9) |
| D395 | % Compression set | 37 (17) | 29 (14) |

The data of Table 3 demonstrate that the 25 mPa·s (25°C.) vinyldimethylsiloxy-terminated polydiorganosiloxane provides an elastomer with comparable physical properties to that achieved with the 450 mPa·s (25°C.) siloxane while requiring only about one-half of the amount of vinyl functionality.

### Example 3

Cured silicone elastomers were prepared from base compositions comprising a 55,000 mPa·s (25°C.) vinyldimethylsiloxy-terminated polydimethylsiloxane polymer and either a 25 mPa·s (25°C.) vinyldimethylsiloxy-terminated polydimethylsiloxane polymer or a 350 mPa.s (25°C.) vinyldimethylsiloxy-terminated polydimethylsiloxane polymer containing pendant vinyl groups.

The compositions were prepared as described in Example 1. The compositions were similar to those described in Table 1, Example 1, with the following exceptions. Two weight ratios of component (i) to component (ii) were tested and are reported in Table 4 under the heading "Ratio (i)/(ii)". The parts of silica added to the compositions were varied as reported in Table 4 under the heading "Silica (Parts)". In all compositions, component (i) was a 55,000 mPa·s (25°C.) vinyldimethylsiloxy-terminated polydimethylsiloxane polymer. Component (ii) of the comparison composition comprised a 350 mPa·s (25°C.) vinyldimethylsiloxy-terminated polydimethylsiloxane polymer containing vinyl substituents on non-terminal silicon atoms and 1.18 weight percent total vinyl. The elastomers prepared from this comparison base composition are labelled as "TP-Vi" (Terminal-Pendant Vinyl) in Table 4. Component (ii) of the test composition comprised a 25 mPa·s (25°C.) vinyldimethylsiloxy-terminated polydimethylsiloxane polymer. The elastomers prepared from the test compositions are labelled as "T-Vi" (Terminal Vinyl) in Table 4. The compositions were catalyzed and cured by methods described in Example 1. The amount of methylhydrogensiloxane crosslinker added to the compositions for curing was varied to provide the silicon-bonded hydrogen to vinyl ratios (SiH/Vi) described in Table 4.

The physical properties of the cured silicone elastomer were tested by the methods of Table 2, Example 1 and the results are reported in Table 4.

**Table 4**

| Comparison of Silicone Elastomers Prepared from Compositions having either Low Molecular Weight Vinyl-Terminal Siloxanes or siloxanes having Terminal and Non-Terminal Viny Substitutents | | | | | | | |
|---|---|---|---|---|---|---|---|
| Ratio (i)/(ii) | Silica (parts) | SiH/Vi | Dur. | Ten. (MPa) | Elong. (%) | Mod. 100% | Tear B (N·m) |
| 95/5 TP-Vi | 32 | 1.5 | 22 | 8.65 | 875 | 75 | 12.2 |
| 95/5 T-Vi | 32 | 1.5 | 18 | 8.12 | 1016 | 50 | 15.9 |
| | | | | | | | |
| 95/5 TP-Vi | 32 | 1.9 | 23 | 9.19 | 864 | 79 | 12.7 |
| 95/5 T-Vi | 32 | 1.9 | 23 | 9.77 | 920 | 65 | 13.2 |
| | | | | | | | |
| 95/5 TP-Vi | 40 | 1.5 | 26 | 8.53 | 908 | 80 | 19.2 |
| 95/5 T-Vi | 40 | 1.5 | 23 | 9.72 | 1098 | 57 | 22.8 |
| | | | | | | | |
| 95/5 TP-Vi | 40 | 1.9 | 29 | 9.59 | 875 | 92 | 17.6 |
| 95/5 T-Vi | 40 | 1.9 | 28 | 10.49 | 945 | 93 | 20.7 |
| | | | | | | | |
| 99/1 TP-Vi | 32 | 1.5 | 15 | 8.08 | 1078 | 47 | 13.9 |
| 99/1 T-Vi | 32 | 1.5 | 15 | 7.49 | 1146 | 37 | 13.0 |
| | | | | | | | |
| 99/1 TP-Vi | 32 | 1.9 | 18 | 9.36 | 1032 | 53 | 14.0 |
| 99/1 T-Vi | 32 | 1.9 | 17 | 9.97 | 1097 | 44 | 16.8 |
| | | | | | | | |
| 99/1 TP-Vi | 40 | 1.5 | 15 | 7.16 | 1205 | 44 | 16.8 |
| 99/1 T-Vi | 40 | 1.5 | 14 | 5.92 | 1210 | 30 | 17.0 |
| | | | | | | | |
| 99/1 TP-Vi | 40 | 1.9 | 21 | 9.64 | 1101 | 55 | 21.0 |
| 99/1 T-Vi | 40 | 1.9 | 20 | 9.73 | 1109 | 48 | 24.5 |

The data of Table 4 demonstrate that over a range of filler levels and SiH to vinyl ratios, the low-viscosity vinyldimethylsiloxy-terminated polydimethylsiloxane provides elastomers with properties equivalent to those achieved using a higher viscosity siloxane having both terminal and non-terminal vinyl substituents bonded to silicon atoms.

## Claims

1. A curable organosiloxane composition comprising
(A) from 75 to 99.9 weight percent, based on the total weight of (A) and (B) of a first alkenyldiorganosiloxy-terminated polydiorganosiloxane having a viscosity within a range of 20,000 mPa·s to 100,000 mPa·s at 25°C. and containing no ethylenically unsaturated hydrocarbon radicals bonded to non-terminal silicon atoms;
(B) from 0.1 to 25 weight percent, based on the total weight of (A) and (B), of a second alkenyldiorganosiloxy-terminated polydiorganosiloxane having a viscosity within a range of 1.0 mPa·s to less than 50 mPa·s at 25°C. and containing no ethylenically unsaturated hydrocarbon radicals bonded to non-terminal silicon atoms;
(C) from 10 to 60 weight percent, based on the weight of the composition, of a treated silica reinforcing filler;
(D) an amount sufficient to cure the composition of an organohydrogensiloxane containing an average of two or more silicon-bonded hydrogen atoms per molecule; and
(E) a platinum group metal-containing catalyst in an amount sufficient to promote curing of the composition.

2. A composition according to claim 1 where component (A) is described by formula R¹R₂SiO(R₂SiO)ₓSiR₂R¹, each R is independently selected from non-ethylenically unsaturated monovalent hydrocarbon radicals comprising one to 20 carbon atoms, each R¹ is independently selected from alkenyl radicals comprising two to ten carbon atoms and x represents a degree of polymerization such that the viscosity of component (A) is within a range of 20,000 to 100,000 mPa·s at 25°C.

3. A composition according to claim 1 where component (B) is described by formula R¹R₂SiO(R₂SiO)_{y}SiR₂R¹, each R is independently selected from non-ethylenically unsaturated monovalent hydrocarbon radicals comprising one to 20 carbon atoms, each R¹ is independently selected from alkenyl radicals comprising two to ten carbon atoms and y represents a degree of polymerization such that the viscosity of component (B) is within a range of 1.0 mPa·s to less than 50 mPa·s at 25°C.

4. A composition according to claim 1 where the treated silica reinforcing filler has a surface area within a range of 50 to 500 m²/g.

5. A composition according to claim 1 where the organohydrogensiloxane contains an average of two or more silicon-bonded hydrogen atoms per molecule with the remaining valences of the silicon atoms being satisfied by divalent oxygen atoms or methyl.

6. A composition according to claim 1 where the ratio of silicon-bonded hydrogen provided by component (D) to alkenyl substituents provided by components (A) and (B) is within a range of 1:10 to 10:1.

7. A composition according to claim 1 comprising 1.0 to 10,000 parts by weight of platinum metal per million parts by weight of the composition.

8. A composition according to claim 1 further comprising an inhibitor that is selected from ethynylcyclohexanol or methylbutynol that retards curing of the composition at less than 10 weight percent of the composition without preventing curing of the composition at elevated temperatures.

9. A composition according to claim 1 where the composition is packaged in at least two containers, with at least a portion of components (A) through (C) present in each container and component (D) and component (E) packaged separate from each other in the containers.

10. A cured silicone elastomer obtainable by curing the composition of claim 1.

## Patentansprüche

1. Härtbare Organosiloxanzusammensetzung, die die folgenden Bestandteile umfaßt:
(A) 75 bis 99,9 Gew.-%, bezogen auf das Gesamtgewicht der Komponenten (A) und (B), eines ersten Polydiorganosiloxans mit endständigen Alkenyldiorganosiloxygruppen mit einer Viskosität im Bereich von 20.000 mPa·s bis 100.000 mPa·s bei 25°C, das keine ethylenisch ungesättigten Kohlenwasserstoffreste, die an nichtterminale Siliciumatome gebunden sind, enthält;
(B) 0,1 bis 25 Gew.-%, bezogen auf das Gesamtgewicht der Komponenten (A) und (B), eines zweiten Polydiorganosiloxans mit endständigen Alkenyldiorganosiloxygruppen mit einer Viskosität im Bereich von 1,0 mPa·s bis weniger als 50 mPa·s bei 25°C, das keine ethylenisch ungesättigten Kohlenwasserstoffreste, die an nichtterminale Siliciumatome gebunden sind, enthält;
(C) 10 bis 60 Gew.-%, bezogen auf das Gewicht der Zusammensetzung, eines behandelten, verstärkenden Siliciumdioxidfüllstoffs;
(D) eine zur Härtung der Zusammensetzung ausreichende Menge eines Organohydrogensiloxans mit im Mittel 2 oder mehr siliciumgebundenen Wasserstoffatomen pro Molekül; und
(E) einen ein Metall der Platingruppe enthaltenden Katalysator in einer ausreichenden Menge, um die Härtung der Zusammensetzung zu fördern.

2. Zusammensetzung nach Anspruch 1, wobei sich die Komponente (A) durch die Formel R¹R₂SiO(R₂SiO)ₓSiR₂R¹ beschreiben läßt, wobei jeder Rest R unabhängig voneinander aus nicht ethylenisch ungesättigten einwertigen Kohlenwasserstoffresten mit 1 bis 20 Kohlenstoffatom(en) ausgewählt ist, jeder Rest R¹ unabhängig voneinander aus Alkenylresten mit 2 bis 10 Kohlenstoffatomen ausgewählt ist und x einen derartigen Polymerisationsgrad bedeutet, daß die Viskosität der Komponente (A) in einem Bereich von 20.000 bis 100.000 mPa·s bei 25°C liegt.

3. Zusammensetzung nach Anspruch 1, wobei sich die Komponente (B) durch die Formel R¹R₂SiO(R₂SiO)_{y}SiR₂R¹ beschreiben läßt, worin jeder Rest R unabhängig voneinander aus nicht ethylenisch ungesättigten einwertigen Kohlenwasserstoffresten mit 1 bis 20 Kohlenstoffatom(en) ausgewählt ist, jeder Rest R¹ unabhängig voneinander aus Alkenylresten mit 2 bis 10 Kohlenstoffatomen ausgewählt ist und y einen derartigen Polymerisationsgrad bedeutet, daß die Viskosität der Komponente (B) in einem Bereich von 1,0 mPa·s bis weniger als 50 mPa·s bei 25°C liegt.

4. Zusammensetzung nach Anspruch 1, wobei der behandelte, verstärkende Siliciumdioxidfüllstoff eine Oberfläche im Bereich von 50 bis 500 m²/g aufweist.

5. Zusammensetzung nach Anspruch 1, wobei das Organohydrogensiloxan im Mittel zwei oder mehr siliciumgebundene Wasserstoffatome pro Molekül enthält, wobei die restlichen Valenzen der Siliciumatome durch zweiwertige Sauerstoffatome oder Methylgruppen abgesättigt sind.

6. Zusammensetzung nach Anspruch 1, wobei das Verhältnis der durch die Komponente (D) bereitgestellten siliciumgebundenen Wasserstoffatome zu den durch die Komponenten (A) und (B) bereitgestellten Alkenylsubstituenten in einem Bereich von 1:10 bis 10:1 liegt.

7. Zusammensetzung nach Anspruch 1, die 1,0 bis 10.000 Gew.-Teile eines Platinmetalls pro 1.000.000 Gew.-Teile der Zusammensetzung umfaßt.

8. Zusammensetzung nach Anspruch 1, die ferner einen Hemmstoff umfaßt, der aus Ethinylcyclohexanol und Methylbutinol ausgewählt ist und der in einer Menge von weniger als 10 Gew.-% der Zusammensetzung die Härtung der Zusammensetzung verzögert, ohne daß die Härtung der Zusammensetzung bei höherer Temperatur verhindert wird.

9. Zusammensetzung nach Anspruch 1, wobei die Zusammensetzung in mindestens zwei Behältern abgepackt ist, wobei mindestens ein Teil der Komponenten (A) bis (C) in jedem Behälter vorhanden ist und die Komponenten (D) und (E) getrennt voneinander in den Behältern verpackt sind.

10. Gehärtetes Siliconelastomer, erhältlich durch Härten der Zusammensetzung nach Anspruch 1.

## Revendications

1. Composition d'organosiloxanes durcissable, comprenant
(A) de 75 à 99,9 % en poids, par rapport au poids total de (A) et de (B), d'un premier polydiorganosiloxane à extrémités alcényldiorganosiloxy ayant une viscosité dans la gamme de 20 000 mPa.s à 100 000 mPa.s à 25 °C, et ne contenant pas de radicaux hydrocarbonés éthyléniquement insaturés liés à des atomes de silicium non terminaux ;
(B) de 0,1 à 25 % en poids, par rapport au poids total de (A) et de (B), d'un second polydiorganosiloxane à extrémités alcényldiorganosiloxy ayant une viscosité dans la gamme de 1,0 mPa.s à moins de 50 mPa.s à 25 °C et ne contenant pas de radicaux hydrocarbonés éthyléniquement insaturés liés à des atomes de silicium non terminaux ;
(C) de 10 à 60 % en poids, par rapport au poids de la composition, d'une charge renforçante de silice traitée ;
(D) une quantité suffisante pour durcir la composition d'un organohydrogénosiloxane contenant une moyenne de deux ou plusieurs atomes d'hydrogène liés au silicium par molécule ; et
(E) un catalyseur contenant un métal du groupe du platine, en une quantité suffisante pour activer le durcissement de la composition.

2. Composition selon la revendication 1, dans laquelle le constituant (A) est représenté par la formule R¹R₂SiO(R₂SiO)ₓSiR₂R¹, chaque R est indépendamment choisi parmi les radicaux hydrocarbonés monovalents non éthyléniquement insaturés comprenant un à 20 atomes de carbone, chaque R¹ est indépendamment choisi parmi les radicaux alcényles comprenant deux à dix atomes de carbone et x représente un degré de polymérisation tel que la viscosité du constituant (A) est dans la gamme de 20 000 à 100 000 mPa.s à 25 °C.

3. Composition selon la revendication 1, dans laquelle le constituant (B) est représenté par la formule R¹R₂SiO(R₂SiO)_{y}SiR₂R¹, chaque R est indépendamment choisi parmi les radicaux hydrocarbonés monovalents non éthyléniquement insaturés comprenant un à 20 atomes de carbone, chaque R¹ est indépendamment choisi parmi les radicaux alcényles comprenant deux à dix atomes de carbone et y représente un degré de polymérisation tel que la viscosité du constituant (B) est dans la gamme de 1,0 mPa.s à moins de 50 mPa.s à 25 °C.

4. Composition selon la revendication 1, dans laquelle la charge renforçante de silice traitée a une surface spécifique dans la gamme de 50 à 500 m²/g.

5. Composition selon la revendication 1, dans laquelle l'organohydrogénosiloxane contient une moyenne de deux ou plusieurs atomes d'hydrogène liés au silicium par molécule, les valences restantes des atomes de silicium étant satisfaites par des atomes d'oxygène divalent ou un groupe méthyle.

6. Composition selon la revendication 1, dans laquelle le rapport de l'hydrogène lié au silicium apporté par le constituant (D) aux substituants alcényles apportés par les constituants (A) et (B) est dans la gamme de 1:10 à 10:1.

7. Composition selon la revendication 1, comprenant 1,0 à 10 000 parties en poids de platine métallique par million de parties en poids de la composition.

8. Composition selon la revendication 1, comprenant en outre un inhibiteur qui est choisi parmi l'éthynylcyclohexanol et le méthylbutynol qui retarde le durcissement de la composition à moins de 10 % en poids de la composition sans empêcher le durcissement de la composition à des températures élevées.

9. Composition selon la revendication 1, dans laquelle la composition est conditionnée au moins dans deux récipients, au moins une partie des constituants (A) à (C) étant présents dans chaque récipient, et le constituant (D) et le constituant (E) étant conditionnés séparés l'un de l'autre dans les récipients.

10. Elastomère de silicone durci pouvant être obtenu en durcissant la composition de la revendication 1.
